# EUROPÄISCHE PATENTSCHRIFT

(11) **EP 0 699 846 B1**
(45) Veröffentlichungstag und Bekanntmachung des Hinweises auf die Patenterteilung: **07.04.1999**
(21) Anmeldenummer: 95111404.0
(22) Anmeldetag: 20.07.1995
(51) Int. Cl.: F16D 65/56, B61H 15/00

(54) **Bremsgestänge für Fahrzeuge, insbesondere Schienenfahrzeuge**
Brake rigging for vehicle brakes, particularly for railway vehicles
Timonerie de frein de véhicules, en particulier pour véhicules de chemin de fer

(30) Priorität: 02.09.1994 DE 4431321
(43) Veröffentlichungstag der Anmeldung: 06.03.1996
(73) Patentinhaber: KNORR-BREMSE Systeme für Schienenfahrzeuge GmbH, 80809 München (DE)
(72) Erfinder: Fuderer, Erich, D-82110 Germering (DE); Sponfeldner, Oskar, D-84453 Mühldorf a. Inn (DE); Staltmeir, Josef, D-80807 München (DE)

(56) Entgegenhaltungen:
- EP-A- 0 125 872
- EP-A- 0 132 601
- EP-A- 0 248 770
- EP-A- 0 324 911
- US-A- 1 941 122

## Beschreibung

Die Erfindung betrifft ein Bremsgestänge für Fahrzeuge, insbesondere Schienenfahrzeuge, mit einem stangenartigen, automatischen Verschleißnachsteller, der ein Schraubgetriebe beinhaltet, das als Verschraubungsteile eine Gewindespindel und eine auf dieser verschraubbare Mutter aufweist, wobei eines der Verschraubungsteile drehfest und das andere Verschraubungsteil drehbar jeweils axial unverschieblich an zwei bei Nachstellvorgängen zueinander relativbewegbaren Bremsgestängeteilen gehaltert ist, und wobei das drehbare Verschraubungsteil mit wenigstens einer Drehkupplung gekoppelt ist.

Verschleißnachsteller, die als Stellorgane eine Kombination aus Muttern und Gewindespindel verwenden, sind weit verbreitet. Um ein schnelles Nachstellen zu ermöglichen und/oder die Mutter bzw. Muttern durch ein nichtselbsthemmendes Gewinde anzutreiben, werden häufig Gewinde mit großer Steigung verwendet; es ist jedoch auch bekannt, besondere Drehantriebe vorzusehen und Gewinde geringer, selbsthemmender Steigung, beispielsweise wie in der Druckschrift EP-A-0 324 911 beschrieben, zu verwenden. In Bremsstellung überträgt der Verschleißnachsteller die Bremskraft. Dabei ist eine zuverlässige Abstützung des gewindebedingten, auf das drehbare Verschraubungsteil wirkenden Drehmomentes auch unter der Einwirkung von Schwingungen und Fahrstößen wichtig, diese vermögen auch bei Verwendung selbsthemmender Gewinde beachtliche Drehmomente auszulösen. Bei Verwendung nichtselbsthemmender Gewinde sind hierzu verzahnt oder unverzahnt ausgebildete Konuskupplungen bekannt, über welche das Drehmoment abgestützt wird. Diese Anordnungen erfordern zumeist einen zusätzlichen Kupplungs- oder Schalthub während Einbrems- und Lösevorgängen, wodurch der vom Bremskraftmotor aufzubringende Hubweg um einen Verlusthub vergrößert wird, was eine entsprechend größere und schwerere Auslegung des Bremskraftmotors bedingt und den Wirkungsgrad des Bremsgestänges mindert.

Ein gattungsgemäßes Bremsgestänge mit Verschleißnachstelleinrichtung in Form eines Zugstangenstellers unter Verwendung eines Schraubgetriebes ist in der Druckschrift EP-A-0 132 601 offenbart. Das Schraubgetriebe umfaßt eine Gewindespindel, welche an beiden Enden Gewindeabschnitte mit zueinander gegenläufigen Gewinden aufweist, und zwei mit den Bremsgestängeteilen gekoppelte Muttern, deren gegenseitiger Abstand durch Drehen der Gewindespindel veränderbar ist. Die Gewindespindel als drehbares Verschraubungsteil ist über eine erste Schraubenfeder in Drehrichtung, in welcher eine Verschleißnachstellung stattfindet, drehfest mit einem Antrieb verbindbar, während bei umgekehrter Drehrichtung die Gewindespindel über die Schraubenfeder mit nur geringer Reibungskraft, eine Reibkupplung bildend, mitgenommen wird. Des weiteren ist eine zweite Schraubenfeder zwischen der Gewindespindel und einem Stift vorgesehen, welche als Einwegkupplung fungiert, die durch eine Reibungskupplung überbrückt ist. Zum Rückstellen der Gewindespindel ist dabei jedoch immer das Sperrmoment der zweiten Schraubenfeder zu überwinden. Diese übernimmt lediglich die Funktion eines Rückhubbegrenzers und dient nicht der Abstützung des Spindelmomentes in Bremsstellung. Um des weiteren beim Lösen die Gewindespindel in Lösestellung drehen zu können, ist die erste Schraubenfeder in einer Richtung sperrend wirkend und weist in der anderen Richtung ein Schleppmoment auf. Die auf die durch Zugbelastung der Zugstange einwirkende Drehmomentbelastung wird durch entsprechende Steigungswahl der Gewinde an den Enden der Gewindespindel so gering wie möglich gehalten.

Es sind Bremsgestänge für Klotz- oder Scheibenbremsen in unterschiedlichen Ausführungen bekannt, beispielsweise H-Bremsgestänge insbesondere für Klotzbremsen, Zangenbremsgestänge insbesondere für Scheibenbremsen und Kombinationen von H- und Zangenbremsgestängen. Für schnellfahrende Fahrzeuge ist es bekannt, mehrere Bremsscheiben auf einer Radsatzwelle anzuordnen, hierbei und auch bei Verwendung von Scheibenbremsen an Antriebsradsätzen muß das Bremsgestänge sehr bauraumsparend ausgebildet sein. Bei Scheibenbremsen muß das Bremsgestänge zudem in vielen Anwendungsfällen in der Lage sein, Drehbewegungen der Bremsscheibe um zu ihrer Achse in Radialebenen liegende Drehachsen, insbesondere vertikal und/oder in Fahrzeuglängsrichtung verlaufende Drehachsen sowie Seitenverschiebungen zwangsfrei aufzunehmen. Die erwähnten Drehbewegungen um die Fahrzeuglängsrichtung können bei auf einer einen Fahrzeugmotor mit einem Antriebs-Radsatz kuppelnden, zu letzterem annähernd konzentrischer Hohlwelle sitzender Bremsscheibe besonders groß werden.

Es ist Aufgabe der Erfindung, ein Bremsgestänge der eingangs angegebenen Art derart auszubilden, daß eine zuverlässige

Funktion des Verschleißnachstellers, insbesondere auch zuverlässige Abstützung des schraubgetriebebedingten Drehmomentes, und ein Vemeiden eines Verlusthubes der erwähnten Art gewährleistet ist, wobei des weiteren je nach Bedarf eine den vorstehend erwähnten Bedingungen, soweit sie beim jeweiligen Anwendungsfall vorliegen, sicher genügende, einfache kleine, gewichtsparende und kompakte Ausführungsform erreichbar sein soll.

Diese Aufgabe wird nach der Erfindung für ein Bremsgestänge der eingangs angegebenen Art durch eine Ausbildung gemäß den Merkmalen gelöst, daß das drehbare Verschraubungsteil über einen ersten Freilauf mit einem drehfesten Teil und über einen zweiten Freilauf mit einem Drehantrieb gekoppelt ist, der von einem bei Bremsungen sich relativ zum axial unverschieblich mit dem drehbaren Verschraubungsteil gekoppelten Bremsgestängeteil bewegenden Bremsgestängeteil betätigbar ist, wobei der erste Freilauf in Drehrichtung des drehbaren Verschraubungsteiles entgegen einer Verschleißnachstellung und der zweite Freilauf in Drehrichtung des Drehantriebes zu einer Verschleißnachstellung sperrend und in jeweils umgekehrter Drehrichtung freilaufend ausgebildet ist.

Für ein derart nach der Erfindung ausgebildetes Bremsgestänge gemäß der weiteren Erfindung besonders vorteilhafte
Ausgestaltungsmöglichkeiten sind den Merkmalen der Unteransprüche entnehmbar.

In der Zeichnung sind besonders vorteilhafte
Auführungsbeispiele für nach den Merkmalen der Erfindung ausgestaltete Bremsgestänge dargestellt, und zwar zeigt
- Fig.1: ein Zangenbremsgestänge in Aufsicht und teilweise aufgeschnitten,
- Fig. 2: einen im Zangenbremsgestänge nach Fig.1 verwendeten, als Druckstangensteller ausgebildeten Verschleißnachsteller aufgeschnitten in vergrößertem Maßstab bei unverschlissenen Bremsbelägen,
- Fig.3: den Verschleißnachsteller nach Fig.2 bei verschlissenen Bremsbelägen,
- Fig .4: einen weitgehend der Fig.2 ensprechenden, jedoch als Zugstangensteller ausgebildeten Verschleißnachsteller,
- Fig.5: eine abgewandelte Betätigungseinrichtung für den Verschleißnachsteller nach Fig.1 oder 2 bei gelöster und
- Fig.6: bei betätigter Bremse.

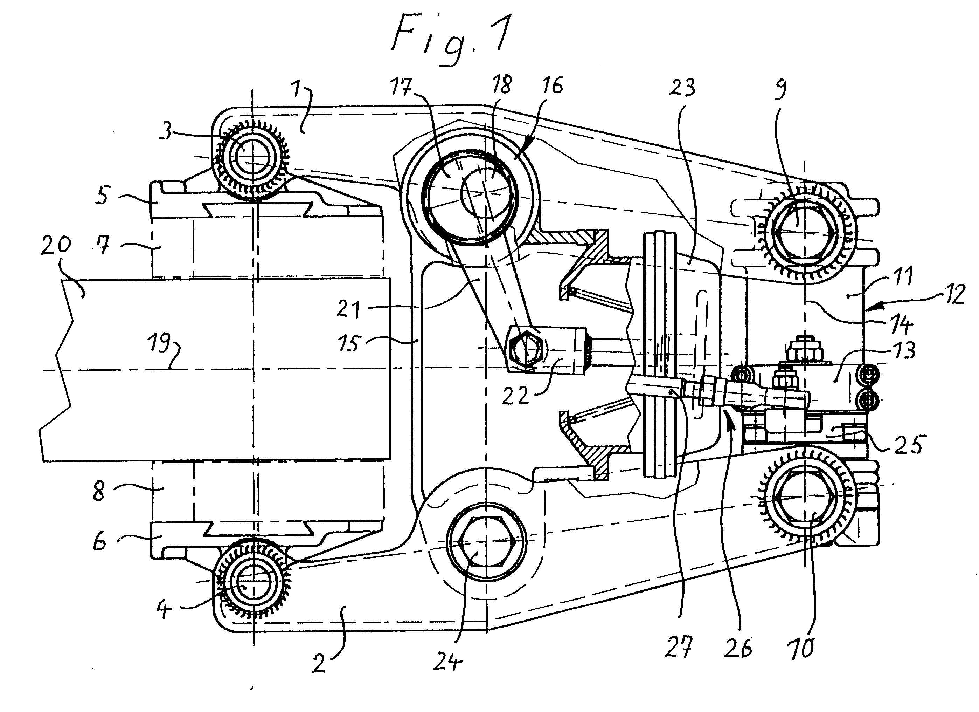

Das Zangenbremsgestänge nach Fig.1 weist als zwei Bremsgestängeteile zwei Zangenhebel 1 und 2 auf, die etwa horizonzal und seitlich versetzt etwa parallel nebeneinander verlaufen. Die einen Enden der beiden Zangenhebel 1 und 2 sind vermittels vertikaler Bolzen 3, 4 an Bremsbacken 5, 6 angelenkt, welche Bremsbeläge 7, a tragen, die in Fig.1 unverschlissen dick dargestellt sind. Andersendig sind die beiden Zangenhebel 1, 2 vermittels vertikaler Bolzen 9, 10 drehbar an einem als Druckstangensteller 11 ausgebildeten Verschleißnachsteller 12 angelenkt. Der Verschleißnachsteller 12 ist nahe des dem Zangenhebel 2 zugeordneten Bolzens 10 mit einer Betätigungsvorrichtung 13 versehen, die um die zur Längsrichtung der Zangenhebel quer verlaufende Achse 14 des Verschleißnachstellers 12 drehbar ist; der Aufbau des Verschleißnachstellers 12 mitsamt der Betätigungsvorrichtung 13 ist später beschrieben.

In ihren mittleren Bereichen sind die beiden Zangenhebel 1 und 2 an einem Zangengehäuse 15 angelenkt, das sich im wesentlichen zwischen den beiden Zangenhebeln 1, 2 befindet. Die Anlenkung des Zangenhebels 1 am Zangengehäuse 15 ist als ein Exzentergetriebe 16 ausgebildet, das eine im Zangengehäuse 15 drehbar gelagerte, vertikale welle 17 und einen an deren Stirnseite fest und mit schräg nach hinten, in Richtung zum Bolzen 9, und vom Zangengehäuse 15 weg verlaufender Exzentrizität zur Achse der Welle 17 angeordneten Zapfen 18 aufweist. Auf dem Zapfen 18 ist der Zangenhebel 1 drehbar gelagert. Bei doppelwangiger Ausbildung der Zangenhebel 1, 2 ist die Welle 17 beidendig mit Zapfen 18 versehen, auf deren jedem eine Wange des Zangenhebels 1 gelagert ist. Die Welle 17 trägt einen radial zur radialen Mittelebene 19 einer Bremsscheibe 20, an welche die Bremsbeläge 7, 8 anpreßbar sind, hin auskragenden Kurbelarm 21, an dessen Ende die Kolbenstange 22 eines einen Bremskraftmotor darstellenden Bremszylinders 23 angelenkt ist. Der Bremszylinder 23 ist im Zangengehäuse 15 nahe des Verschleißnachstellers 12 mit etwa parallel zur und nahe der Mittelebene 19 horizontal verlaufender Achsrichtung gehaltert.

Die Anlenkung des Zangenhebeis 2 am Zangengehäuse 15 ist als einfaches Drehlager mit einem vertikal verlaufenden Bolzen 24 ausgebildet.

Die Betätigungsvorrichtung 13 weist einen von der Zeichenebene im wesentlichen nach oben auskragenden Kurbelarm 25 auf, an dessen Ende ein Betätigungsgestänge 26 angelenkt ist. Das Betätigungsgestänge 26 umfaßt eine sich vom Kurbelarm 25 etwa horizontal und zur Mitteleben .19 schräg in Richtung zur gegenseitigen Anlenkung von Kurbelarm 21 und der Kolbenstange 22 hin erstreckende Stange 27 auf, deren bremsscheibenseitiges Ende an einem nicht gezeigten, zweiarmigen, etwa vertikalen Hebel an dessen oberen Ende angelenkt ist. Dieser Hebel ist mittig drehbar am Zangengehäuse 15 gelagert und an seinem unteren Ende an einem dritten Bresmgestängeteil, der Kolbenstange 22 oder dem kolbenstangennahen Ende des Kurbelarms 21, angelenkt, beim Betätigen des Bremszylinders 23 und demgemäß Verschieben der Kolbenstange 22 in Richtung zur Bremsscheibe 20 wird daher über den nicht gezeigten Hebel die Stange 27 von der Bremsscheibe 20 weg verschoben und der Kurbelarm 25 um die Achse 14 bei Blickrichtung vom Zangenhebel 2 her im Uhrzeigersinn gedreht.

Bei dieser Betätigung werden auch der Kurbelarm 21 und die Welle 17 gemäß Fig.1 im Uhrzeigersinn gedreht, wodurch der Zapfen 18 den Zangenhebel 1 an den Zangenhebel 2 annähert. Das Bremszangengestänge wird dabei unter Anpressen der Bremsbeläge 7, 8 an die Bremsscheibe 20 zugespannt, wobei infolge der klein gestaltbaren Exzentrizizät des Zapfens 18, bezogen auf die Hebellängen der Zangenhebel 1, 2, große Kraftübersetzungen mit entsprechend hohen Zuspannkräften erreichbar sind.

Bei Anordnung der Bremsscheibe 20 auf einer nicht gezeigten Hohlwelle eines Hohlwellenantriebes für einen Schienenfehrzeug-Radsatz, wobei die Hohlwelle die Radsatzwelle etwa konzentrisch mit Spielabstand umgibt und einendig an einem Antriebsmotor, andersendig am Radsatz angekoppelt ist, kann es zur Aufnahme der hierbei möglichen, großen Winkelauslenkungen um eine zur Fahrzeuglängsrichtung parallele Achse besonders vorteilhaft sein, wenn das Zangengehäuse 15 an seiner Oberseite vermittels einer nicht dargestellten Lagerung um eine zur Fahrzeuglängsachse annähernd parallel verlaufende Drehachse drehbar an einem fahrzeugfesten Teil, insbesondere dem Fahrzeug-oder Drehgestellrahmen, drehbar angelenkt und aufgehängt ist, wobei die Bremsbacken 5, 6 so zu haltern sind, daß sie den Drehbewegungen des Zangengehäuses zwangfrei zu folgen vermögen. Die Aufhängung der Bremsbacken 5, 6 kann aufhängependelfrei erfolgen, wobei von der Bremsscheibe 20 auf sie einwirkende Bremskräfte auf die Zangenhebel 1, 2 und von diesen auf das Zangengehäuse 15 zu übertragen sind; bei Verwendung von Aufhängependeln ist ihre Lagerung an den Bolzen 3, 4 vertikalverschieblich auszubilden. Bei dieser Bremsgestänge-Ausführung mit horizontalen Zangenhebeln 1,2 bewirkt das Exzentergetriebe 16 durch seine im Vergleich zum Bolzen 24 größeren Masse ein Übergewicht, das durch die dem Zangenhebel 2 nahe Anordnung der Betätigungsvorrichtung 13 und zumindest, teilweise auch der Stange 26 ausgeglichen wird. Das Bremszangengestänge befindet sich daher in einem indifferenten Drehgleichgewicht um die zur Fahrzeuglängsrichtung parallele Drehachse.

Unter Berücksichtung der hohen Kraftübersetzung muß der Verschleißnachsteller 12 möglichst verlustarm, insbesondere hinsichtlich von als Verlusthub zu wertenden Schalthüben, ausgebildet werden. Das Zangenbremsgestänge ist dann besonders vorteilhaft, bei hohen Zuspannkräften einfach, klein und leicht sowie kompakt ausbildbar. Selbsverständlich sind derart verlustarm ausgebildete Verschleißnachsteller auch für Bremsgestänge jeglicher anderer Bauart vorteilhaft, sie steigern zumindest deren Wirkungsgrad.

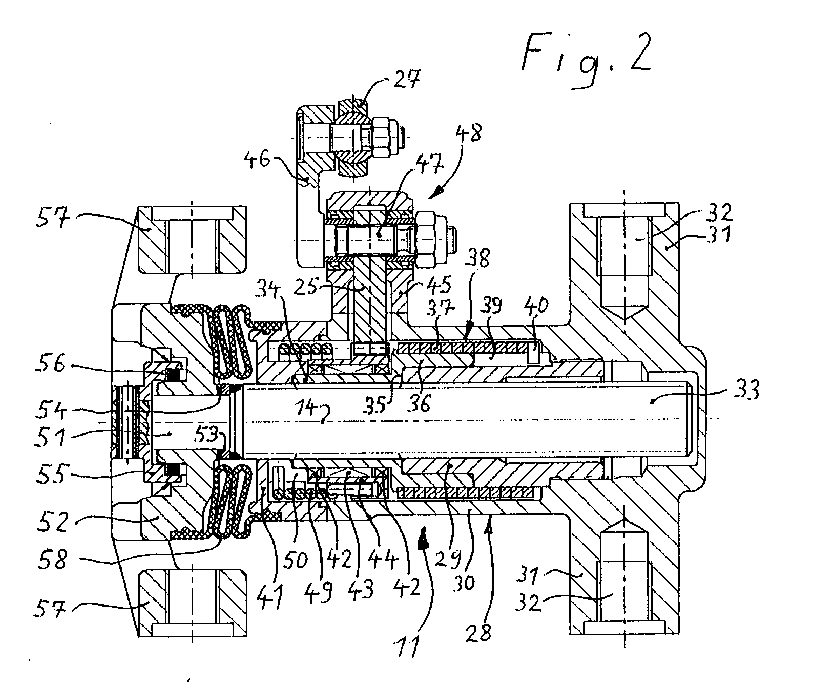

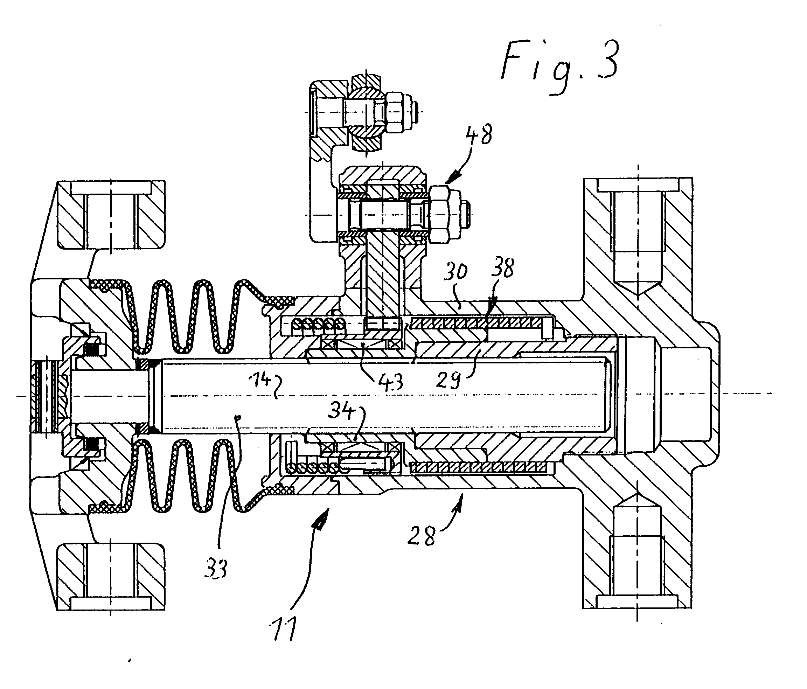

Der verlustarme Druckstangensteller 11 nach Fig.1 ist vorteilhaft gemäß Fig.2 und 3 auszuführen. Nach Fig.2 weist der Druckstangensteller 11 zu seinem einen Ende ein im wesentlichen zu seiner Achse 14 konzentrisches, doppelrohrartiges Gehäuse 28 mit einem radial inneren Rohrteil 29 und einem äußeren Rohrteil 30 auf. An seinem äußeren Ende trägt das Gehäuse 28 radial auskragend einander gegenüberliegend und zueiander koaxial zwei Anlenkaugen 31, in deren zur Achse 14 rechtwinklig verlaufende Bohrungen 32 zwei Bolzen 9 gemäß Fig. 1 zur Anlenkung der beiden Wangen des doppelwangigen Zangenhebels 1 gehaltert sind, die Bolzen 9 sind in Fig. 2 nicht dargestellt.

Das radial innere Rohrteil 29 umfaßt mit Spiel eine zu ihm wesentlich längere, koaxiale Gewindespindel 33, die den Anlenkaugen 31 abgewandt aus dem Gehäuse 28 herausragt. Mit der Gewindespindel 33 ist eine Mutter 34 verschraubt, die Gewindespindel 33 stellt das undrehbare Verschraubungsteil und die Mutter 34 das drehbare Verschraubungsteil eines Schraubgetriebes dar. Die Mutter 34 stützt sich axial und drehbar vermittels einer Innenflanschfläche 35 gegen die Stirnfläche des inneren Rohrteiles 29 ab und ist mit einem zylindrischen Fortsatz 36 größeren Durchmessers versehen, der das Rohrteil 29 auf einem Teil dessen Länge radial außen übergreift. Im Anschluß an den Fortsatz 36 weist das Rohrteil 29 einen Abschnitt mit zu ersterem gleichen Außendurchmesser auf, auf beiden liegt eine Schlingfeder 37 zum Bilden eines ersten Freilaufes 38 mit radialem Reibschluß auf. Die Schlingfeder 37 ist vermittels ihres radial nach innen abgewinkelten, in eine Nut 39 des Rohrteiles 29 eingreifenden einen Endes 40 unverdrehbar auf dem Rohrteil 29 gehaltert.

Das radialäußere Rohrteil 30 umfaßt mit Spiel die Schlingfeder 37, ist länger als das Rohrteil 29 und endet mit einem Deckelabschnitt 41, der die Gewindespindel 33 mit Spiel umfaßt und an welchem axial innenseitig die Mutter 34 gegenüberliegend zur Innenflanschfläche 35 axial und drehbar abgestützt ist. Auf einem außenzylindrischen Abschnitt der Mutter 34 ist vermittels zweier Drehlager 42 und eines zwischen diesen befindlichen, zweiten Freilaufes 43 in einer Richtung relativdrehbar eine Nabe 44 eines Antriebsteils 48 gelagert. Der zweite Freilauf 43 ist wie üblich mit Klemmkörpern ausgestattet, er kann jedoch abweichend hierzu in beliebiger Art, beispielsweise ebenfalls mit einer Schlingfeder, ausgeführt sein. Die Nabe 44 trägt den radial auskragenden Kurbelarm 25, welcher aus dem Rohrteil 30 durch einen Schlitz ins Freie ragt, wobei der Schlitz radialaußen durch eine mit dem Kurbelarm 25 durch eine zugleich eine Verlängerung 46 des Kurbelarms 25 halternde Verschraubung 47 verbundene, auf dem Außenumfang des Rohrteiles 30 gleitend aufliegende Abdeckung 45 abgedeckt ist. Am Ende der Verlängerung 46 des Kurbelarmes 25 ist die Stange 27 angelenkt. Die Teile 25 und 44 bis 47 bilden ein Antriebsteil 48 ensprechend der Betätigungsvorrichtung 13 nach Fig.1. Im Rohrteil 30 befindet sich nahe des Deckelabschnittes 41 eine Drehfeder 49, deren Enden einerseits in eine Nut 50 des Deckelabschnittes 41 und andererseits in eine zur Achse 14 parallele Bohrung des Kurbelarms 25 an dessen Ansatzstelle zur Nabe 44 eingreifen; die Drehfeder 49 belastet das Antriebsteil 48 ständig in einer Drehrichtung.

Die bei unverschlissenen Bremsbelägen 7, 8 gemäß Fig.2 bis nahe zum rechten Ende des Innenraumes des Rohrteils 29 in dieses eintauchende Gewindespindel 33 überragt das Rohrteil 30 an dessen linkem Ende. An ihrem dem Gehäuse 28 abgewandten Ende ist die Gewindespindel 33 mit einem zylindrischen Fortsatz 51 mit zu ihr kleinerem Außendurchmessers versehen, der ein Halteteil 52 drehbar und geringfügig axialverschieblich durchragt. Am Übergang zum Fortsatz 52 trägt die Gewindespindel 33 eine radialringartige, gegebenenfalls verzahnte Ratschenkupplungsfläche 53, die an einer entsprechenden Kupplungsfläche an der dem Gehäuse 28 zugewandten Seite des Halteteiles 52 eine Ratschenkupplung 54 bildet. Gehäuseabgewandt ist zwischen das Halteteil 52 und ein mit dem Ende des Fortsatzes fest verbundenes Kopfteil 55 eine Feder 56 mit Vorspannung eingespannt, die die Gewindespindel 33 axial in Schließrichtung der Ratschenkupplung 54 belastet. Das Kopfteil 55 ist mit nicht dargestellten Profilflächen zum Ansetzen eines ebenfalls nicht dargestellten Drehwerkzeuges, beispielsweise mit Sechskantflächen zum Ansetzen eines Schraubenschlüssels, versehen, durch welches die Gewindespindel 33 willkürlich, insbesondere manuell, drehbar ist. Das Halteteil 52 weist dem Anlenkaugen des Gehäuseteiles 28 entsprechende Anlenkaugen 57 zum Anlenken des Zangenhebels 2 bzw. dessen Wangen auf. Zwischen dem Halteteil 52 und dem Rohrteil 30 erstreckt sich ein Faltenbalg 58.

Der erste Freilauf 38 ist in Drehrichtung der Mutter 34 zum Verschleißnachstellen, also Verkürzen der Länge des Druckstangenstellers 11, freigebend und in umgekehrter Drehrichtung der Mutter 34 zum Gehäuse 28 sperrend, der zweite Freilauf 43 in Drehrichtung der Mutter 34 entgegen einer Verschleißnachstellung, also in Verlängerungsrichtung des Druckstangenstellers 11, zum Antriebsteil 48 sperrend und in umgekehrter Drehrichtung freigebend ausgebildet. Die Drehfeder 49 belastet das Antriebsteil 48 in seiner vom zweiten Freilauf 43 relativ zur Mutter 34 freigegebenen Drehrichtung. Das Gewinde der Gewindespindel 33 und der Mutter 34 ist mit selbsthemmender Steigung ausgeführt.

Bei gelösten Bremsen, der Stellung des Zangenbremsgestänges nach Fig.1, hält die Drehfeder 49 das Antriebsteil 48 sicher in dessen Endstellung, über den zweiten Freilauf 43 ist somit ein ungewolltes Drehen der Mutter 34 entgegen der Nachstellrichtung ausgeschlossen. Ein Drehen der Mutter 34 entgegen der Nachstellrichtung schließt auch der erste Freilauf 38 aus. Die von den Bremszangenhebeln 1, 2 bei Fahrstößen oder Schwingungen auf den Druckstangensteller 11 eventuell einwirkenden Druckkräfte können somit nicht zu dessen Verkürzung und einem Vergrößern des Abstandes der Bremsbeläge 7, 8 zur Bremsscheibe 20 führen In umgekehrter Drehrichtung geben zwar beide Freiläufe 38 und 43 ein Drehen der Mutter 34 frei, doch wirken in dieser Richtung infolge Anschlagens der Bremsbeläge 7, 8 an die Bremsscheibe 20 praktisch keine Kräfte von den Zangenhebeln 1, 2 auf den Druckstangensteller 11 ein, wodurch die Reibungen im Gewinde und den Freiläufen 38, 43 zum Ausschließen ungewollten Drehungen ausreichen.

Beim Einbremsen mit durch Verschleiß an den Reibbelägen 7, 8 bedingtem Überhub wird, wie bereits erwähnt, die Kolbenstange 22 zur Bremsscheibe 20 hin verschoben, wodurch über den nicht gezeigten, zweiarmigen Hebel die Stange 27 in entgegengesetzer Richtung bewegt wird. Nach Überwinden von Lagerungsspielen wird das Antriebsteil 48 und nach Überwinden eines Drehspieles im zweiten Freilauf 43 unter dessen Sperren die Mutter 34 in Nachstellrichtung, also Verlängerungsrichtung des Druckstangenstellers 11, bei freigebendem ersten Freilauf 38 gedreht. Beim Einbremsen ohne verschleißbedingtem Überhub reichen die erwähnten Spiele zur Aufnahme der Bewegungen aus, es erfolgt also kein Drehen der Mutter 34 und damit auch keine Nachstellung.

Die während Bremsungen auf den Druckstangensteller 11 einwirkenden Druckkräfte belasten die Ratschenkupplung 54 in Schließrichtung, so daß keine ungewollten Drehungen der Gewindespindel 33 auftreten können.

Beim nachfolgenden Lösen kehren alle Teile mit Ausnahme der Mutter 34 nach einem Nachstellvorgang in ihre Ausgangslagen zurück, die Mutter 34 verbleibt jedenfalls infolge Sperrens des ersten Freilaufs 38 in ihrer Drehlage.

Zum Sicherstellen eines bestimmten Lösehubes der Bremsbeläge 7, 8 von der Bremsscheibe 20 können die vorerwähnten Spiele gering gehalten und dafür ein genau bemessenes Sollspiel im Betätigungsgestänge 26 bzw. Antriebsteil 48 oder dem Freilauf 43 vorgesehen werden.

Bei verschlissenen Bremsbelägen 7, 8 gelangt der Druckstangensteller 11 in die in Fig.3 dargestellte Lage, in welcher die Gewindespindel 33 maximal aus dem Gehäuse 28 ausgeschraubt, an diesem jedoch durch ausreichende Eingriffslänge noch gut geführt ist; er erreicht hierbei seine größte Länge. Zum Einsetzen neuer Bremsbeläge ist der Druckstangensteller 11 in die in Fig.2 dargestellte Lage zurückzustellen, wozu die Gewindespindel 33 nach Ansetzen des bereits erwähnten Drehwerkzeuges im Drehsinn der Gewindespindel 33 zum Einschrauben in das Gehäuse 28 zu drehen ist.

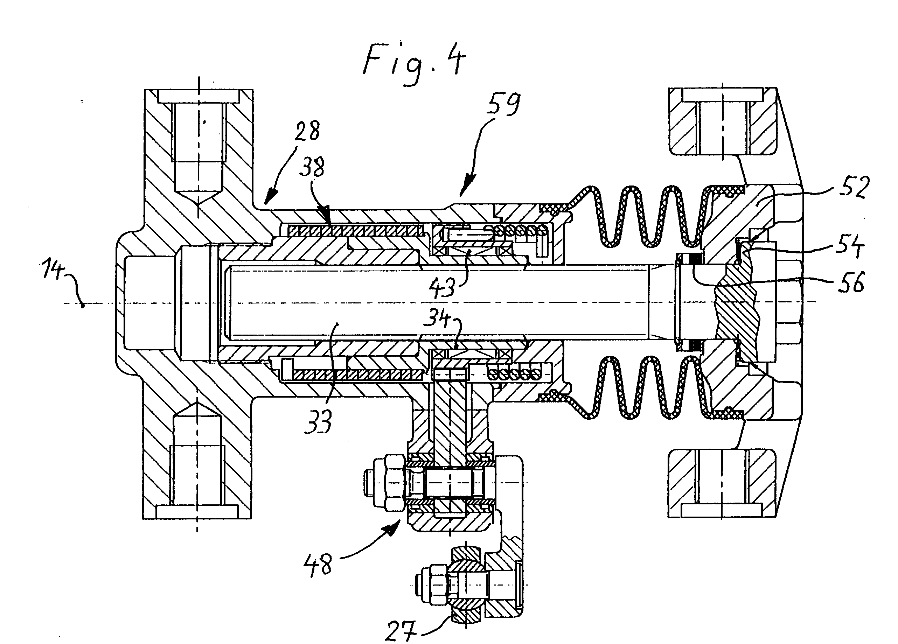

Ein Verschleißnachsteller im Prinzipaufbau nach Fig.2 und 3 kann auch als Zugstangensteller 59 gemäß Fig.4 ausgeführt werden, der bei Bremsungen von den Bremskräften in Verlängerungsrichtung belastet wird und der bei Nachstellvorgängen seine Länge verkürzt. Für Fig.4 sind den Fig.2, 3 entsprechende Bezugszahlen für entsprechende Bauteile verwendet.

Ein Zugstangensteller 59 wird beispielsweise benötigt bei Abänderung des Bremsgestänges nach Fig.1 derart, daß das Exzentergetriebe am Ende des Zangenhebels 1 anstelle des Verschleißnachstellers 12 und das Ende des Zangenhebels 2 am Zangengehäuse angelenkt wird, wobei das Exzentergetriebe bei seiner Betätigung die Zangenhebelenden auseinanderspreizend auszubilden ist. Der Zugstangensteller 59 ist hierbei an den mittleren Bereichen der Zangenhebel 1, 2 anzulenken.

Bei zu den Fig. 2, 3 gleichgerichteter Gewindesteigung der Gewindespindel-Mutter-Verschraubung sind hierbei die Drehrichtungen zum Sperren bzw. Lösen der beiden Freiläufe 38 und 43 umzukehren, der erste Freilauf ist also z.B. in Verschraubungsrichtung der Mutter 34 gemäß Fig. 4 nach rechts, in Verlängerungsrichtung des Zugstangenstellers 59, sperrend auszubilden. Das Antriebsteil 48, die Stange 27 und/oder deren Ankoppelung an die Kolbenstange 22 als drittes Bremsgestängeteil sind derart auszuführen, daß beim Bremsenzuspannen die Mutter 34 des Zugstangenstellers 59 in umgekehrter Drehrichtung, verglichen mit dem Druckstangensteller 11, gedreht wird; in einfacher Weise ist dies dadurch erreichbar, daß der Zugstangensteller 59 in um 180 Grad gedrehter Drehlage um seine Achse 14, also entgegengesetzt zu den Fig. 2, 3 auskragendem Antriebsteil 48, angeordnet und die Stange 27 sowie der nicht dargestellte, zweiarmige Hebel entsprechend verlagert werden. Weiterhin sind bezüglich des Halteteiles 52 die Anordnungen von Ratschenkupplung 54 und Feder 56 zu vertauschen, die Ratschenkupplung 54 befindet sich dann an der dem Gehäuse 28 abgewandten Seite des Halteteils 52. Im übrigen entspricht der Aufbau des Zugstangenstellers 59 demjenigen des Druckstangenstellers 11. Die Funktionsweise des Zugstangenstellers 59 entspricht unter Berücksichtigung der umgekehrt wirkenden Bremskräfte ebenfalls derjenigen des Druckstangenstellers, weitere Ausführungen hierzu erübrigen sich daher.

Bei den beschriebenen Druck- bzw. Zugstangenstellern 11 bzw. 59 können die Gewindespindel 33 und Mutter 34 als undrehbares bzw. drehbares Verschraubungsteil unter entsprechendem Vertauschen der Ankoppelungen von Ratschenkupplung und Freiläufen auch vertauscht werden.

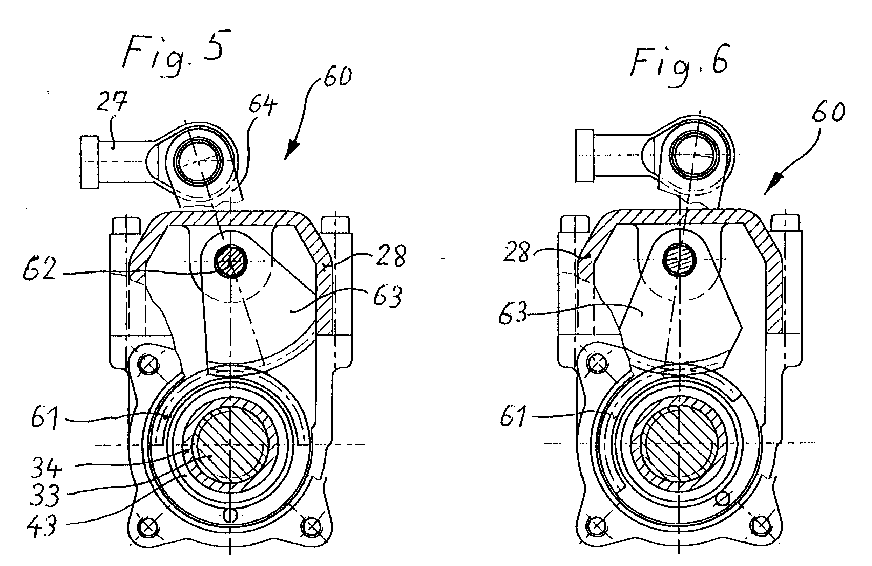

in Abänderung zum vorstehend beschriebenen Antriebsteil 48 ist auch ein Antriebsteil 60 gemäß Fig.5 und 6 sowohl für den Druckstangen- als auch den Zugstangensteller 11 bzw. 59 verwendbar. Der zweite Freilauf 43 befindet sich hierbei zwischender Mutter 34 und einem ein Zahnrad darstellenden Ritzel 61, mit welchem ein seitlich des Ritzels 61 um eine Drehachse 62 drehbar am Gehäuse 28 gelagertes Zahnsegment 63 kämmt. Das Ritzel 61 kann hierbei entsprechend der Nabe 44 auf der Mutter 34, aber auch am Gehäuse 28 drehgelagert sein. Das Zahnsegment 63 trägt einen radial auskregenden Kurbelarm 64, der an seinem aus dem Gehäuse 28 herausragenden Ende an der Stange 27 angelenkt ist. Durch entsprechendes Bemessen von Zahnsegment 63 und Ritzel 61 kann eine geeignete Übersetzung zwischen den Bewegungen der Stange 27 und Drehungen des Ritzels 61 bzw. der Mutter 34 eingestellt werden. Im Vergleich zum Antriebsteil 48 wird durch den Zahnsegment-Ritzelantrieb 63, 61 eine Umkehrung des Drehantriebes der Mutter 34, bezogen auf Bewegungen der Stange 27, bewirkt, was bei der Bewegungsankoppelung der Stange 27 an das dritte Bremsgestängeteil zu berücksichtigen ist.

Die Fig.5 zeigt das Antriebsteil 60 bei gelösten Bremsen, das Zahnsegment 63 steht dabei nahe seines einen Endes in Verzahnungseingriff zum Ritzel 61. Bei Einbremsvorgängen wird das Zahnsegment 63 von der Stange 27 im Uhrzeigersinn gedreht, so daß es in eine Stellung nach Fig.6 gelangt.

In Abänderung zum Antriebsteil 60 kann das Zahnsegment 63 mit dem Kurbelarm 64 entfallen, wenn die Stange 27 in ihrem nachstellerseitigen Endbereich als Zahnstange ausgebildet wird, die unmittelbar mit dem Ritzel 61 in Verzahnungseingriff steht. Im Verzahnungsbereich ist die Stange vorzugsweise an einem entsprechend auszubildenden Teil des Gehäuses 28 längsverschieblich zu lagern.

Das Bremsgestänge kann in Abwandlung zu den vorstehend beschriebenen Ausführungbeispielen, welche in Verbindung mit den beschriebenen Ausgestaltungen des Druck- bzw. Zugstangenstellers 11 bzw. 59 ein besonders vorteilhaftes Bremsgestänge ergeben, auch andersartig, beispielsweise als ein H-Bremsgestänge für Klotzbremsen oder in sonstiger Weise ausgebildet sein, zum Einbau des Druck- bzw. Zugstangenstellers 11 bzw 59 als Verschleißnachstellvorrichtung ist lediglich wesentlich, daß die drei Bremsgestängeteile vorhanden sind, zwischen deren zwei der Verschleißnachsteller einzukoppeln ist und deren drittes Bremsgestängeteil mit der Betätigungsvorrichtung bzw dem Drehantrieb der Nachstellvorrichtung zu koppeln ist.

### Kurzfassung:

Das Bremsgestänge ist vorzugsweise als Zangenbremsgestänge für eine Scheibenbremse ausgeführt, es weist zwischen zwei Bremsgestängeteilen einen als Druckstangensteller (11) oder Zugstangensteller ausgebildeten Verschleißnachsteller mit Gewindespindel (33) und Mutter (34) auf. Vorzugsweise die Mutter (34) als drehbares Verschraubungsteil ist vermittels eines ersten, in Drehrichtung entgegen einer Nachstellung sperrenden Freilaufs (38) mit einem undrehbaren Gehäuse (28) und eines zweiten Freilaufs (43) mit einem koaxial zur Mutter (34) drehbaren Antriebsteil (48) gekoppelt, der zweite Freilauf (43) ist in Nachstell-Drehrichtung des Antriebsteiles (48) sperrend ausgebildet. Das Antriebsteil (48) ist mit einem dritten Bremsgestängeteil gekoppelt, welches bei Einbremsvorgängen einen großen Bremshub ausführt und sich daher zweckmäßig nahe eines Bremskraftmotors befindet.

### Aufstellung der Bezugszeichen

- 1: Zangenhebel
- 2: Zangenhebel
- 3: Bolzen
- 4: Bolzen
- 5: Bremsbacke
- 6: Bremsbacke
- 7: Bremsbelag
- 8: Bremsbelag
- 9: Bolzen
- 10: Bolzen
- 11: Druckstangensteller
- 12: Verschleißnachsteller
- 13: Betätigungsvorrichtung
- 14: Achse
- 15: Zangengehäuse
- 16: Exzentergetriebe
- 17: Welle
- 18: Zapfen
- 19: Mittelebene
- 20: Bremsscheibe
- 21: Kurbeiarm
- 22: Kolbenstange
- 23: Bremszylinder
- 24: Bolzen
- 25: Kurbelarm
- 26: Betätigungsgestänge
- 27: Stange
- 28: Gehäuse
- 29: Rohrteil
- 30: Rohrteil
- 31: Anlenkauge
- 32: Bohrung
- 33: Gewindespindel
- 34: Mutter
- 35: Innenflanschfläche
- 36: Fortsatz
- 37: Schlingfeder
- 38: erster Freilauf
- 39: Nut
- 40: Ende
- 41: Deckel abschnitt
- 42: Drehlager
- 43: zweiter Freilauf
- 44: Nabe
- 45: Abdeckung
- 46: Verlängerung
- 47: Verschraubung
- 48: Antriebsteil
- 49: Drehfeder
- 50: Nut
- 51: Fortsatz
- 52: Halteteil
- 53: Ratschenkupplungsfläche
- 54: Ratschenkupplung
- 55: Kopfteil
- 56: Feder
- 57: Anlenkauge
- 58: Faltenbalg
- 59: Zugstangensteller
- 60: Antriebsteil
- 61: Ritzel
- 62: Drehachse
- 63: Zahnsegment
- 64: Kurbelarm

## Patentansprüche

1. Bremsgestänge für Fahrzeuge, insbesondere Schienenfahrzeuge, mit einem stangenartigen, automatischen Verschleißnachsteller (12), der ein Schraubgetriebe beinhaltet, das als Verschraubungsteile eine Gewindespindel (33) und eine auf dieser verschraubbare Mutter (34) aufweist, wobei zum Nachstellen eines der Verschraubungsteile drehfest und das andere Verschraubungsteil drehbar jeweils axial unverschieblich an zwei bei Nachstellvorgängen zueinander relativ bewegbaren Bremsgestängeteilen gehaltert ist wobei das drehbare Verschraubungsteil mit wenigstens einer Drehkupplung gekoppelt ist, **dadurch gekennzeichnet,** daß das drehbare Verschraubungsteil über einen ersten Freilauf (38) mit einem drehfesten Teil sowie über einen zweiten Freilauf (43) mit einem Drehantrieb gekoppelt ist, der von einem Bremsgestängeteil betätigbar ist, wobei der erste Freilauf (38) in Drehrichtung des drehbaren Verschraubungsteils entgegen einer Verschleißnachstellung und der zweite Freilauf (43) in Drehrichtung des Drehantriebs zu einer Verschleißnachstellung sperrend und in jeweils uumgekehrter Drehrichtung freilaufend ausgebildet ist, und daß das beim Nachstellen drehfest gehaltene Verschraubungsteil zum Rückstellen drehbar ist.

2. Bremsgestänge nach Anspruch 1, dadurch gekennzeichnet, daß der erste Freilauf(38) zwischen das drehbare Verschraubungsteil und ein dieses axial unverschieblich und drehbar halterndes Gehäuse (28) eingeordnet ist, wobei das Gehäuse (28) um die Achse (14) der insbesondere ein Gewinde mit selbsthemmender Steigung aufweisenden Schraubgetriebes undrehbar mit dem dem drehbaren Verschraubungsteil zugeordneten Bremsgestängeteil gekoppelt ist.

3. Bremsgestänge nach Anspruch 2, dadurch gekennzeichnet, daß der Drehantrieb ein von einem dritten Bremsgestängeteil um die Achse (14) drehantreibbares Antriebsteil (48) aufweist und daß der zweite Freilauf (43) zwischen dieses Antriebsteil(48) und das drehbare verschraubungsteil eingeordnet ist.

4. Bremsgestänge nach Anspruch 3, dadurch gekennzeichnet, daß das Antriebsteil (48) von einer Drehfeder (49) drehbelastet ist.

5. Bremsgestänge nach Anspruch 3, dadurch gekennzeichnet, daß das Antriebsteil (48) einen zur Achse radial auskragenden Kurbelarm (25) trägt, der über ein Betätigungsgestänge (26) mit dem dritten Bremsgestängeteil gekoppelt ist, wobei das dritte Bremgestängeteil zumindest nahezu übersetzungsfrei von einem das Bremsgestänge bewegenden Bremskraftmotor bewegbar ist.

6. Bremsgestänge nach Anspruch 3, dadurch gekennzeichnet, daß das Antriebsteil (60) ein Ritzel (61) beinhaltet , das im Gehäuse (28) drehbar ist und mit dessen Verzahnung die Verzahnung eines Zahnsegmentes (63) kämmt, welches um eine zur Achse (14) versetzte Drehachse (62) drehbar im Gehäuse (28) gelagert ist und einen Kurbelarm (64) trägt, der über ein Betätigungsgestänge (26) mit dem dritten Bremsgestängeteil gekoppelt ist.

7. Bremsgestänge nach Anspruch 3, dadurch gekennzeichnet, daß das Antriebsteil ein Ritzel (61) beinhaltet , das im Gehäuse (28) drehbar ist und mit dessen Verzahnung eine im Gehäuse längsverschieblich gelagerte Zahnstange kämmt, welche mit dem dritten Bremsgestängeteil gekoppelt ist.

8. Bremsgestänge nach einem oder mehreren der vorstehenden Ansprüche, dadurch gekennzeichnet, daß das drehfest gehaltene Verschraubungsteil über eine gegen die Kraft einer Feder (56) lösbare Ratschenkupplung (54) mit dem ihm zugeordneten Bremsgestängeteil gekoppelt ist und Profilflächen zum Ansetzen eines Drehwerkzeuges aufweist.

9. Bremsgestänge nach einem oder mehreren der vorstehenden Ansprüche, dadurch gekennzeichnet, daß zumindest einer der Freiläufe (38) als Schlingfederfreilauf ausgebildet ist

10. Bremsgestänge nach Anspruch 9 in Verbindung mit einem der Ansprüche 4, 5, 6 oder 7, dadurch gekennzeichnet, daß der erste Freilauf (38) als Schlingfederfreilauf zwischen einem zylindrischen Fortsatz (36) des drehbaren Verschraubungsteiles und einer zylindrischen Wandung des Gehäuses (28) und der zweite Freilauf (43) mit am Außenumfang des drehbaren Verschraubunsteiles angreifenden Klemmkörpern ausgebildet ist.

11. Bremsgestänge nach einem oder mehreren der vorstehenden Ansprüche, dadurch gekennzeichnet, da das undrehbare Verschraubungsteil die Gewindespindel (33) und das drehbare Verschraubungsteil die Mutter (34) ist.

12. Bremsgestäng nach den Ansprüchen 10 und 11, dadurch gekennzeichnet, daß das Gehäuse (28) zur Achse (14) doppelrohrartig ausgebildet ist, wobei die Gewindespindel (33) mit Spiel in das zu ihr kurze, innere Rohrteil (29) eingreift, daß der zylindrische Fortsatz (36) das innere Rohrteil (29) radialaußen übergreift, die Stirnfläche des inneren Rohteiles (29) drehbar an einer am der Ansatzstelle des Fortsatzes (36) befindlichen Innenflanschfläche (35) der Mutter (34) an.liegt, die Schlingfeder (37) des Schlingfederfreilaufs an einem an den Fortsatz (36) anschließenden, einen zu diesem gleichen Außendurchmesser aufweisenden Abschnitt des inneren Rohrteils (29) aufsitzt und gehaltert ist, das äußere Rohrteil (30) eine größere Länge als das innere Rohrteil (29) aufweist, aber kürzer als die Gewindespindel (33) ist und mit einem diese mit Spiel umschließenden Deckelabschnitt (41) endet, in welchem sich die drehfest gegen diesen abstützende Drehfeder (49) befindet und gegen welchen innenseitig die Mutter (34) gegenüberliegend zu ihrer Innenflanschfläche (35) axial und drehbar anliegt, und daß das Antriebsteil (48) auf einem außenzylindrischen Abschnitt der Mutter (34) drehbar gelagert ist, wobei der zweite Freilauf (43) in diese Lagerung integriert ist.

13. Bremgestänge nach den Ansprüchen 8 und 11 oder 12, dadurch gekennzeichnet, daß bei Ausbildung des Verschleißnachstellers als Druckstangensteller (11) die Ratschenkupplung (54) eine vorzugsweise verzahnte, axiale Drehkupplung zwischen der Gewindespindel (33) und einem auf einem zylindrischen, gehäuseabgewandten Fortsatz (51) derselben relativdrehbar und axialverschieblich sitzenden Halteteil (52) auf dessen dem Gehäuse (28) zugewandter Seite aufweist, wobei die Gewindespindel (33) ihre im wesentlichen radialringartige Ratschenkupplungsfläche (53) dem Gehäuse (28) abgewandt trägt, und daß an dem mit dem der Gewindespindel (33) zugeordneten Bremsgestängeteil um die Achse (14) der Gewindespindel (33) undrehbar gekoppelten Halteteil (52) gehäuseabgewandt die Feder (56) mit Vorspannung anliegt, die andererseits an der Gewindespindel (33) abgestützt ist und diese in Schließrichtung der Drehkupplung belastet.

14. Bremsgestänge nach den Ansprüchen 8 und 11 oder 12, dadurch gekennzeichnet, daß bei Ausbildung des Verschleißnachstellers als Zugstangensteller (59) die Ratschenkupplung (54) eine vorzugsweise verzahnte, axiale Drehkupplung zwischen der Gewindespindel (33) und einem auf einen zylindrischen, gehäuseabgewandten Fortsatz (51) derselben relativdrehbar und axialverschieblich sitzenden Halteteil (52) auf dessen dem Gehäuse (28) abgewandter Seite aufweist, wobei die Gewindespindel (33) ihre im wesentlichen radialringartige Ratschenkupplungsfläche dem Gehäuse (28) zugewandt trägt, und daß an dem mit dem der Gewindespindel (33) zugeordneten Bremsgestängeteil um die Achse (14) der Gewindespindel (33) undrehbar gekoppelten Halteteil gehäusezugewandt die Feder (56) mit Vorspannung anliegt, die andererseits an der Gewindespindel (33) abgestützt ist und diese in Schließrichtung der Drehkupplung belastet.

15. Bremsgestänge nach Anspruch 13 oder 14, dadurch gekennzeichnet, daß sich zwischen dem Halteteil (52) und dem Gehäuse (28) ein die Gewindespindel (33) umgebender Faltenbalg (58) erstreckt.

16. Bremsgestänge nach Anspruch 13, 14 oder 15, das als Bremszange mit zwei doppelwangige Zangenhebeln (1; 2) ausgebildet ist, zwischen deren eine Enden bzw. mittlere Bereichen der Verschleißnachsteller (12) und deren mittlere Bereichen bzw. eine Enden eine Zuspannvorrichtung eingelenkt ist, dadurch gekennzeichnet, daß das Gehäuse (28) und das Halteteil (52) jeweils zwei koaxiale, einander gegenüberliegende Anlenkaugen (57) mit zur Achse (14) und zur Längserstreckung der Zangenhebel (1; 2) rechtwinklig verlaufenden Anlenkachsen aufweist, an welchen die Wangen der Zangenhebel (1; 2) angelenkt sind, und daß die Zuspannvorrichtung ein Zangengehäuse (15) mit in diesem gehalterten Bremszylinder (23) aufweist, wobei der Bremszylinder (23) mit etwa mittig zwischen den Zangenhebeln (1; 2) und etwa parallel zur Längsrichtung der Zangenhebel (1; 2) verlaufender Achse den einen Enden der Zangenhebel (1; 2) benachbart angeordenet ist, das Zangengehäuse (15) am einem Zangenhebel (2) vermittels eines Drehlagers und am anderen Zangenhebel (1) vermittels einer als Exzentergetriebe (16) ausgebildeten Lagerung angelenkt ist, wobei das Exzentergetriebe (16) von der Kolbenstange (22) des Bremszylinders (23) über einen Kurbelarm (21) antreibbar und das Betätigungsgestänge (26) mit der Kolbenstange (22) gekoppelt ist.

17. Bremsgestänge nach Anspruch 16, dadurch gekennzeichnet, daß bei um eine zur Längsrichtung der etwa horizontal verlaufenden Zangenhebel (1; 2) etwa parallele Aufhängeachse drehbarer Lagerung des Zangengehäuses (15) an einem festen Fahrzeugteil zum Erzielen eines indifferenten Drehgleichgewichtes um die Aufhängeachs die Betätigungsvorrichtung (13) und/oder das Betätigungsgestänge (26) des Verschleißnachstellers (12) zum Ausgleich des Gewichtes des Exzentergetriebes (16) zum diesem gegenüberliegenden Zangenhebel (2) hin seitlich versetzt angeordnet sind.

18. Bremsgestänge nach einem der vorhergehenden Ansprüche, **dadurch gekennzeichnet**, daß der Drehantrieb von einem bei Bremsungen sich relativ zum axial unverschieblich mit dem drehbaren Verschraubungsteil gekoppelten Bremsgestänge bewegenden Bremsgestängeteil betätigbar ist.

## Claims

1. Brake linkage for vehicles, in particular rail vehicles, having a rod-like automatic wear adjuster (12), which contains a helical gearing which has, as threaded portions, a threaded spindle (33) and a nut (34) which can be screwed on to the latter, wherein, for adjusting, one of the threaded portions is held in a rotationally secure manner and the other threaded portion is held rotatably, in each case in a manner such that they are axially fixed, on two brake-linkage portions which are movable relative to each other during adjusting processes, with the rotatable threaded portion being coupled to at least one rotary coupling, characterised in that the rotatable threaded portion is coupled by way of a first free-wheel (38) to a rotationally secure portion, and by way of a second free-wheel (43) to a rotary driving mechanism, which can be actuated by a brake-linkage portion, the first free-wheel (38) being constructed in a manner such that it locks in the direction of rotation of the rotatable threaded portion that is in the opposite direction to a wear adjustment and the second free-wheel (43) being constructed in a manner such that it locks in the direction of rotation of the rotary driving mechanism that is in the direction of a wear adjustment, each being constructed in a manner such that they are freewheeling in the respective opposite direction of rotation, and in that the threaded portion which is held in a rotationally secure manner during the adjusting can be rotated for the resetting.

2. Brake linkage according to claim 1, characterised in that the first free-wheel (38) is arranged between the rotatable threaded portion and a housing (28) which holds the threaded portion in an axially fixed and rotatable manner, the housing (28) being coupled to the brake-linkage portion that is allocated to the rotatable threaded portion in a manner preventing rotation about the axis (14) of the helical gearing, which has in particular a thread with a self-locking pitch.

3. Brake linkage according to claim 2, characterised in that the rotary driving mechanism has a drive portion (48) which can be driven in a rotating manner about the axis (14) by a third brake-linkage portion, and in that the second free-wheel (43) is arranged between this drive portion (48) and the rotatable threaded portion.

4. Brake linkage according to claim 3, characterised in that the drive portion (48) is torsionally loaded by a torsion spring (49).

5. Brake linkage according to claim 3, characterised in that the drive portion (48) carries a crank arm (25) which projects radially with respect to the axis and is coupled by way of an actuating linkage (26) to the third brake-linkage portion, the third brake-linkage portion being moveable in an at least substantially transmission-free manner by a braking force motor which moves the brake linkage.

6. Brake linkage according to claim 3, characterised in that the drive portion (60) contains a pinion (61), which is rotatable in the housing (28) and the toothing of which meshes in the toothing of a toothed segment (63) which is mounted in the housing (28) in a manner such that it can be rotated about an axis of rotation (62) offset with respect to the axis (14), and which carries a crank arm (64) coupled to the third brake-linkage portion by way of an actuating linkage (26).

7. Brake linkage according to claim 3, characterised in that the drive portion contains a pinion (61), which is rotatable in the housing (28) and the toothing of which meshes in a toothed rack which is mounted in the housing in a longitudinally displaceable manner and which is coupled to the third brake-linkage portion.

8. Brake linkage according to one or more of the preceding claims, characterised in that the threaded portion which is held in a rotationally secure manner is coupled to the brake-linkage portion which is allocated to it by way of a ratchet coupling (54), which is detachable against the force of a spring (56), the threaded portion having profiled faces on which a turning tool can be placed.

9. Brake linkage according to one or more of the preceding claims, characterised in that at least one of the free-wheels (38) is constructed as a wrap-spring free-wheel.

10. Brake linkage according to claim 9 in connection with one of claims 4, 5, 6 or 7, characterised in that the first free-wheel (38) is constructed as a wrap-spring free-wheel between a cylindrical extension (36) of the rotatable threaded portion and a cylindrical wall of the housing (28), and the second free-wheel (43) is constructed so as to have clamping bodies which engage on the external periphery of the rotatable threaded portion.

11. Brake linkage according to one or more of the preceding claims, characterised in that the unrotatable threaded portion is the threaded spindle (33) and the rotatable threaded portion is the nut (34).

12. Brake linkage according to claims 10 and 11, characterised in that the housing (28) is constructed in a double-tube-type manner with respect to the axis (14), with the threaded spindle (33) engaging with play in the inner tube portion (29), which is short in comparison with said threaded spindle, in that the cylindrical extension (36) overlaps the inner tube portion (29) radially on the outside, the end face of the inner tube portion (29) rests rotatably on an inner flange surface (35) of the nut (34), which inner flange surface is located at the connecting point of the extension (36), the wrap spring (37) of the wrap-spring free-wheel sits and is held on a section of the inner tube portion (29) that joins on to the extension (36) and has the same external diameter as the latter, the outer tube portion (30) has a greater length than the inner tube portion (29) but is shorter than the threaded spindle (33) and ends with a cover section (41) which encloses the said threaded spindle with play and in which there is located the torsion spring (49) which is supported against the said cover section in a rotationally secure manner, and against which cover section, on the inside, the nut (34), at the opposite end to its inner flange surface (35), rests axially and rotatably, and in that the drive portion (48) is rotatably mounted on an externally cylindrical section of the nut (34), with the second free-wheel (43) being integrated in this bearing.

13. Brake linkage according to claims 8 and 11 or 12, characterised in that the wear adjuster is constructed as a push-rod adjuster (11) and the ratchet coupling (54) has, between the threaded spindle (33) and a holding portion (52) which sits in a relatively rotatable and axially displaceable manner on a cylindrical extension (51) of the said threaded spindle that faces away from the housing, on the side of the said holding portion that faces the housing (28), a preferably toothed axial rotary coupling, with the threaded spindle (33) carrying its substantially radial-ring-type ratchet coupling surface (53) so that the latter faces away from the housing (28), and in that, facing away from the housing, the spring (56) rests with prestress on the holding portion (52) which is coupled to the brake-linkage portion that is allocated to the threaded spindle (33), in a manner preventing rotation about the axis (14) of the threaded spindle (33), which spring, on the other hand, is supported on the threaded spindle (33) and loads the latter in the closing direction of the rotary coupling.

14. Brake linkage according to claims 8 and 11 or 12, characterised in that the wear adjuster is constructed as a pull-rod adjuster (59) and the ratchet coupling (54) has, between the threaded spindle (33) and a holding portion (52) which sits in a relatively rotatable and axially displaceable manner on a cylindrical extension (51) of the said threaded spindle that faces away from the housing, on the side of the said holding portion that faces away from the housing (28), a preferably toothed axial rotary coupling, with the threaded spindle (33) carrying its substantially radial-ring-type ratchet coupling surface so that the latter faces the housing (28), and in that, facing the housing, the spring (56) rests with prestress on the holding portion which is coupled to the brake-linkage portion that is allocated to the threaded spindle (33), in a manner preventing rotation about the axis (14) of the threaded spindle (33), which spring, on the other hand, is supported on the threaded spindle (33) and loads the latter in the closing direction of the rotary coupling.

15. Brake linkage according to claim 13 or 14, characterised in that a bellows (58) which surrounds the threaded spindle (33) extends between the holding portion (52) and the housing (28).

16. Brake linkage according to claim 13, 14 or 15, which is constructed as a brake caliper having two double-cheeked caliper levers (1; 2), between the one ends or centre regions of which is articulated the wear adjuster (12) and between the centre regions or one ends, respectively, of which is articulated a brake application device, characterised in that the housing (28) and the holding portion (52) each have two coaxial opposing articulation bosses (57) having articulation axes which extend at right angles to the axis (14) and the longitudinal extent of the caliper levers (1; 2) and on which the cheeks of the caliper levers (1; 2) are articulated, and in that the brake application device has a caliper housing (15) with a brake cylinder (23) held therein, with the brake cylinder (23) being arranged next to the one ends of the caliper levers (1; 2) with an axis which extends substantially centrally between the caliper levers (1; 2) and substantially parallel to the longitudinal direction of the caliper levers (1; 2), the caliper housing (15) being articulated on one caliper lever (2) by means of a pivot bearing and on the other caliper lever (1) by means of a bearing which is constructed as an eccentric gearing (16), with the eccentric gearing (16) being drivable by the piston rod (22) of the brake cylinder (23) by way of a crank arm (21) and the actuating linkage (26) being coupled to the piston rod (22).

17. Brake linkage according to claim 16, characterised in that with the caliper housing (15) mounted on a fixed vehicle portion so as to be rotatable about a suspension axis which is substantially parallel to the longitudinal direction of the substantially horizontally extending caliper levers (1; 2), in order to achieve a balanced turning equilibrium about the suspension axis, the actuating device (13) and/or the actuating linkage (26) of the wear adjuster (12) is/are arranged so as to be laterally offset with respect to the caliper lever (2) which is opposite the eccentric gearing, in order to compensate the weight of the said eccentric gearing (16).

18. Brake linkage according to one of the preceding claims, characterised in that the rotary driving mechanism can be actuated by a brake-linkage portion which, in the event of braking, moves relative to the brake linkage which is coupled in an axially fixed manner to the rotatable threaded portion.

## Revendications

1. Timonerie de frein pour des véhicules, notamment des véhicules à déplacement sur rails, comportant un dispositif de rattrapage automatique d'usure (12) du type à tiges, qui comprend un mécanisme de transmission à vis comportant, en tant qu'éléments de vissage, une broche filetée (33) et un' écrou (34) apte à se visser sur cette derrière, étant précisé qu'en vue du rattrapage, l'un des éléments de vissage est retenu bloqué en rotation et l'autre élément de vissage est retenu mobile en rotation, chacun immobilisé en translation axiale. sur deux éléments de la timonerie de frein qui sont déplaçables l'un par rapport à l'autre lors d'opérations de rattrapage, l'élément de vissage mobile en rotation étant alors accouplé à au moins un raccord tournant, caractérisée en ce que l'élément de vissage mobile en rotation est accouplé, par l'intermédiaire d'une première roue libre (38), à une pièce bloquée en rotation et, par l'intermédiaire d'une deuxième roue libre (43), à un mécanisme d'entraînement en rotation, qui peut être actionné par un élément de la timonerie de frein, les roues libres étant alors conçues pour être bloquantes, la première (38) dans le sens de rotation, opposé à un rattrapage d'usure, de l'élément de vissage mobile en rotation et la deuxième (43) dans le sens de rotation, conduisant à un rattrapage d'usure, du mécanisme d'entraînement en rotation, et pour permettre un roulement libre dans le sens de rotation respectivement inverse, et en ce que l'élément de vissage maintenu bloqué en rotation lors du rattrapage peut être entraîné en rotation pour le rappel.

2. Timonerie de frein selon la revendication 1, caractérisée en ce que la première roue libre (38) est interposée entre l'élément de vissage mobile en rotation et un carter (28) retenant ce dernier immobilisé en translation axiale et mobile en rotation, le carter (28) étant alors accouplé à l'élément de la timonerie de frein associé à l'élément de vissage mobile en rotation, en étant lui-même immobilisé en rotation autour de l'axe (14) du mécanisme de transmission à vis qui comporte, en particulier, un filetage à pas auto-bloquant.

3. Timonerie de frein selon la revendication 2, caractérisée en ce que le mécanisme d'entraînement en rotation comporte un élément d'entraînement (48) pouvant être entraîné en rotation, autour de l'axe (14), par un troisième élément de la timonerie de frein et en ce que la deuxième roue libre (43) est interposée entre cet élément d'entraînement (48) et l'élément de vissage mobile en rotation.

4. Timonerie de frein selon la revendication 3, caractérisée en ce que l'élément d'entraînement (48) est sollicité en rotation par un ressort de torsion (49).

5. Timonerie de frein selon la revendication 3, caractérisée en ce que l'élément d'entraînement (48) porte un bras de manivelle (25) qui fait saillie radialement par rapport à l'axe et qui est accouplé, par l'intermédiaire d'une tringlerie d'actionnement (26), au troisième élément de la timonerie de frein, le troisième élément de la timonerie de frein étant déplaçable, au moins pratiquement sans effet multiplicateur, par un moteur générateur de force de freinage déplaçant la timonerie de frein.

6. Timonerie de frein selon la revendication 3, caractérisée en ce que l'élément d'entraînement (60) comprend un pignon (61), qui est monté à rotation dans le carter (28) et qui engrène par sa denture avec la denture d'un secteur denté (63), lequel est monté dans le carter (28), à rotation autour d'un axe de rotation (62) décalé par rapport à l'axe (14), et porte un bras de manivelle (64), qui est accouplé au troisième élément de la timonerie de frein par l'intermédiaire d'une tringlerie d'actionnement (26).

7. Timonerie de frein selon la revendication 3, caractérisée en ce que l'élément d'entraînement comprend un pignon (61), qui est monté à rotation dans le calter (28) et qui engrène par sa denture avec une crémaillère montée mobile en translation longitudinale dans le carter, laquelle crémaillère est accouplée au troisième élément de la timonerie de frein.

8. Timonerie de frein selon une ou plusieurs des revendications précédentes, caractérisée en ce que l'élément de vissage maintenu bloqué en rotation est accouplé à l'élément de la timonerie de frein qui lui est associé par l'intermédiaire d'un accouplement à cliquet (54), libérable à l'encontre de la force d'un ressort (56), et présente des surfaces profilées pour l'application d'un outil d'entraînement en rotation.

9. Timonerie de frein selon une ou plusieurs des revendications précédentes, caractérisée en ce que l'une au moins des roues libres (38) est conçue sous forme d'une roue libre à ressort enroulé.

10. Timonerie de frein selon la revendication 9, en liaison avec l'une des revendications 4, 5, 6 ou 7, caractérisée en ce que la première roue libre (38) est conçue sous forme d'une roue libre à ressort enroulé, située entre un prolongement cylindrique (36) de l'élément de vissage mobile en rotation et une paroi cylindrique du carter (28), et la deuxième roue libre (43) est munie de corps de coincement s'appuyant sur le pourtour extérieur de l'élément de vissage mobile en rotation.

11. Timonerie de frein selon une ou plusieurs des revendications précédentes, caractérisée en ce que l'élément de vissage immobile en rotation est la broche filetée (33) et l'élément de vissage mobile en rotation est l'écrou (34).

12. Timonerie de frein selon les revendications 10 et 11, caractérisée en ce que le carter (28) présente une configuration en double tube concentrique à l'axe (14), la broche filetée (33) s'engageant alors avec un certain jeu dans l'élément tubulaire intérieur (29) de courte longueur par rapport à elle, en ce que le prolongement cylindrique (36) vient mordre radialement de l'extérieur sur l'élément tubulaire intérieur (29), la surface d'extrémité de l'élément tubulaire intérieur (29) est appliquée, libre en rotation, sur une surface intérieure en collerette (35) de l'écrou (34) qui est située au niveau de la zone de rattachement du prolongement (36), le ressort enroulé (37) de la roue libre à ressort enroulé repose et est retenu sur un tronçon, faisant immédiatement suite au prolongement (36) et présentant un diamètre extérieur identique à celui de ce dentier, de l'élément tubulaire intérieur (29), l'élément tubulaire extérieur (30) présente une plus grande longueur que l'élément tubulaire intérieur (29), mais est plus court que la broche filetée (33) et se termine par un tronçon-chapeau (41) entourant cette derrière avec un certain jeu, tronçon-chapeau dans lequel se trouve le ressort de torsion (49) prenant appui contre lui en étant immobilisé en rotation et contre lequel l'écrou (34) s'applique intérieurement dans le sens axial, à l'opposé de sa surface intérieure en collerette (35), et en étant libre en rotation, et en ce que l'élément d'entraînement (48) est monté à rotation sur un tronçon extérieurement cylindrique de l'écrou (34), la deuxième roue libre (43) étant intégrée dans le palier prévu pour ce montage.

13. Timonerie de frein selon les revendications 8 et 11 ou 12, caractérisée en ce que, dans le cas où le dispositif de rattrapage d'usure est conçu sous forme d'un dispositif d'ajustement à tige de poussée (11), l'accouplement à cliquet (54) comporte, entre la broche filetée (33) et une pièce de support (52) montée en rotation relative et mobile axialement sur un prolongement cylindrique (51), dirigé à l'opposé du calter, de ladite broche, un raccord tournant axial, de préférence denté, situé du côté de la pièce de support tourné vers le calter (28), la broche filetée (33) portant alors du côté tourné à l'opposé du calter (28) sa surface essentiellement de forme radialement annulaire (53), qui appartient à l'accouplement à cliquet, et en ce que sur la pièce de support (52) accouplée, en étant immobilisée en rotation autour de l'axe (14) de la broche filetée (33), à l'élément de la timonerie de frein associé à la broche filetée (33), est appliqué sous précontrainte, sur la face tournée à l'opposé du carter, le ressort (56) qui, de l'autre côté, s'appuie sur la broche filetée (33) et sollicite cette deuxième dans le sens de la fermeture du raccord tournant.

14. Timonerie de frein selon les revendications 8 et 11 ou 12, caractérisée en ce que, dans le cas où le dispositif de rattrapage d'usure est conçu sous forme d'un dispositif d'ajustement à tige de traction (59), l'accouplement à cliquet (54) comporte, entre la broche filetée (33) et une pièce de support (52) montée en rotation relative et mobile axialement sur un prolongement cylindrique (51), dirigé à l'opposé du calter, de ladite broche filetée, un raccord tournant axial, de préférence denté, situé du côté de la pièce de support tourné à l'opposé du carter (28), la broche filetée (33) portant alors du côté tourné vers le carter (28) sa surface essentiellement de forme radialement annulaire, qui appartient à l'accouplement à cliquet, et en ce que sur la pièce de support accouplée, en étant immobilisée en rotation autour de l'axe (14) de la broche filetée (33), à l'élément de la trésorerie de frein associé à la broche filetée (33), est appliqué sous précontrainte, sur la face tournée vers le carter, le ressort (56) qui s'appuie, de l'autre côté, sur la broche filetée (33) et sollicite cette dernière dans le sens de la fermeture du raccord tournant.

15. Timonerie de frein selon la revendication 13 ou 14, caractérisée en ce que, entre la pièce de support (52) et le carter (28) s'étend un soufflet (58) placé autour de la broche filetée (33).

16. Timonerie de frein selon la revendication 13, 14 ou 15, qui est conçue sous forme d'un étrier de frein comportant deux leviers d'étrier à double joue (1; 2), entre des premières extrémités ou des parties médianes desquels le dispositif de rattrapage d'usure (12) est articulé et entre les parties médianes ou les premières extrémités desquels un dispositif de serrage est articulé, caractérisée en ce que le carter (28) et la pièce de support (52) comportent respectivement deux oeillets d'articulation coaxiaux (57) opposés l'un à l'autre, qui présentent des axes d'articulation s'étendant perpendiculairement à l'axe (14) et à la dimension longitudinale des leviers d'étrier (1;2) et sur lesquels les joues des leviers d'étrier (1;2) sont articulées, et en ce que le dispositif de serrage comporte un bâti d'étrier (15) dans lequel est supporté un cylindre de frein (23), le cylindre de frein (23), dont l'axe est à peu près centré entre les leviers d'étrier (1; 2) et s'étend à peu près parallèlement à la direction longitudinale des leviers d'étrier (1; 2), étant disposé au voisinage des premières extrémités des leviers d'étrier (1; 2) et le bâti d'étrier (15) étant articulé sur un levier d'étrier (2) au moyen d'un palier de rotation et sur l'autre levier d'étrier (1) au moyen d'un palier conçu sous forme d'un mécanisme à excentrique (16), le mécanisme à excentrique (16) pouvant alors être entraîné par la tige de piston (22) du cylindre de frein (23), par l'intermédiaire d'un bras de manivelle (21), et la tringlerie d'actionnement (26) étant accouplée à la tige de piston (22).

17. Timonerie de frein selon la revendication 16, caractérisée en ce que, dans le cas d'un montage en rotation du bâti d'étrier (15) sur un élément fixe du véhicule, autour d'un axe de suspension sensiblement parallèle à la direction longitudinale des leviers d'étrier (1; 2) s'étendant à peu près horizontalement, pour l'obtention d'un équilibre indifférent en rotation autour de l'axe de suspension, le dispositif d'actionnement (13) et/ou la tringlerie d'actionnement (26) du dispositif de rattrapage d'usure (12) sont, pour équilibrer le poids du mécanisme à excentrique (16), disposés dans des positions décalées latéralement en direction du levier d'étrier (2) placé en vis-à-vis de ce dernier.

18. Timonerie de frein selon l'une des revendications précédentes, caractérisée en ce que le mécanisme d'entraînement en rotation peut être actionné par un élément de la timonerie de frein qui, lors de freinages, se déplace par rapport à l'élément de la timonerie de frein accouplé, immobile en translation axiale, à l'élément de vissage mobile en rotation.
